# FASCICULE DE BREVET EUROPEEN

(11) **EP 4 638 317 B1**
(45) Date de publication et mention de la délivrance du brevet: **04.11.2026**
(21) Numéro de dépôt: 23832712.6
(22) Date de dépôt: 13.12.2023
(51) Int. Cl.: B65G 29/00, B23P 19/00, B65G 47/14, B65G 47/91

(54) **DISPOSITIF DE STOCKAGE ET DE DISTRIBUTION DE COMPOSANTS D'ASSEMBLAGE EQUIPE D'AU MOINS UN MOYEN ROTATIF DE TRANSFERT DE COMPOSANTS D'ASSEMBLAGE**
VORRICHTUNG ZUM LAGERN UND VERTEILEN VON MONTAGEBAUTEILEN MIT MINDESTENS EINEM DREHMITTEL ZUM TRANSFERIEREN VON MONTAGEBAUTEILEN
DEVICE FOR STORING AND DISTRIBUTING ASSEMBLY COMPONENTS PROVIDED WITH AT LEAST ONE ROTARY MEANS FOR TRANSFERRING ASSEMBLY COMPONENTS

(30) Priorité: 22.12.2022 FR 2214311
(43) Date de publication de la demande: 29.10.2025
(73) Titulaire: Seti-Tec, 77090 Collégien (FR)
(72) Inventeur: PEREIRA SANTO, Sébastien, 2820-568 Charneca da Caparica (PT)
(74) Mandataire: Vidon Brevets & Stratégie
(86) Numéro de dépôt international: PCT/EP2023/085539
(87) Numéro de publication internationale: WO 2024/132757

(56) Documents cités:
- AT-U1- 13 016
- CN-A- 106 395 225
- DE-A1- 102009 015 618
- US-B2- 10 406 562

## Description

### 1. Domaine technique

Le domaine de l'invention est celui de la conception et de la réalisation de dispositifs de stockage et de distribution de composants d'assemblage mis en œuvre dans l'industrie, notamment aéronautique, pour transférer des éléments de fixation entre une zone d'alimentation et une zone de distribution.

### 2. Art antérieur

Des composants d'assemblage (comme des vis, des rivets, ou autre) sont couramment mis en œuvre dans l'industrie pour procéder à des assemblages.

Il est pour cela nécessaire de déplacer ces composants d'assemblage depuis une zone d'alimentation où ils sont stockés, vers une zone de distribution où ils sont amenés en vue d'être ultérieurement mis en place au moyen d'un outil d'assemblage.

Parmi les solutions connues, il existe les dispositifs de stockage et de distribution de composants d'assemblage qui comprennent respectivement :
- une pluralité de réservoirs de composants,
- des moyens d'extraction, en dehors des réservoirs, de composants associés,
- des moyens d'acheminement, à destination d'au moins un poste de travail distant, de composants extraits des réservoirs par les moyens d'extraction, et
- des moyens de transfert, jusqu'aux moyens d'acheminement, de composants extraits des réservoirs par les moyens d'extraction.

Toutefois, les moyens connus pour assurer un tel transfert sont assez peu efficaces, peu précis, complexes et/ou encombrants et peuvent donc être améliorés.

Il est donc encore possible d'améliorer les dispositifs de ce type, ce qui constitue un objectif poursuivi par l'invention.

DE102009015618A1 divulgue un dispositif selon le préambule de la revendication 1.

### 3. Objectifs de l'invention

L'invention a notamment pour objectif d'apporter une solution efficace à au moins certains de ces différents problèmes.

Un objectif de l'invention est, selon au moins un mode de réalisation, d'améliorer le transfert des composants d'assemblage extraits d'un réservoir associé vers des moyens d'acheminement à un poste de travail.

Notamment, un objectif de l'invention est, selon au moins un mode de réalisation, de proposer un moyen de transfert permettant d'améliorer la précision et l'efficacité de la préhension d'un composant d'assemblage en vue de son transfert et/ou pendant celui-ci.

En particulier, un objectif de l'invention est de fournir, dans au moins un mode de réalisation, un dispositif de stockage et de distribution de composants d'assemblage mettant en œuvre au moins un tel moyen de transfert.

Un autre objectif de l'invention est, selon au moins un mode de réalisation, de fournir un tel moyen de transfert permettant d'améliorer la cadence de transfert des composants d'assemblage.

Un autre objectif de l'invention est, selon au moins un mode de réalisation, de fournir un tel moyen de transfert adapté à des composants d'assemblage de géométries et/ou de type différents.

Un autre objectif de l'invention est de procurer, dans au moins un mode de réalisation, un tel dispositif de stockage et de distribution de composants d'assemblage qui soit simple à mettre en œuvre et/ou compacte et/ou économique.

### 4. Présentation de l'invention

La technique proposée se rapporte à un dispositif de stockage et de distribution de composants d'assemblage comprenant :
- une pluralité de réservoirs aptes à contenir des composants d'assemblage,
- des moyens d'extraction, en dehors des réservoirs, de composants d'assemblage, les moyens d'extraction étant respectivement associés à chacun des réservoirs,
- des moyens d'acheminement, à destination d'au moins un poste de travail distant, de composants d'assemblage extraits des réservoirs par les moyens d'extraction,
- des moyens de transfert, jusqu'aux moyens d'acheminement, de composants d'assemblage extraits des réservoirs par les moyens d'extraction.

Selon l'invention, les réservoirs sont disposés de façon radiale autour d'un axe central.

En outre, les moyens de transfert comprennent des moyens de préhension, d'au moins un composant d'assemblage extrait par les moyens d'extraction, les moyens de préhension étant portés respectivement par un bras mobile en rotation autour de l'axe central de sorte à transférer jusqu'aux moyens d'acheminement chaque composant d'assemblage extrait d'un des réservoirs depuis lequel il est extrait.

Un tel agencement permet notamment de limiter l'encombrement du dispositif, plus encore lors de la mise en œuvre de celle invention dans un dispositif étagé. Un tel dispositif permet en outre d'améliorer la cadence de transfert des composants d'assemblage.

Selon une caractéristique particulière du dispositif, au moins un des moyens de préhension est un moyen de préhension unitaire d'un composant d'assemblage extrait par le moyen d'extraction associé.

La mise en œuvre d'un tel moyen de préhension unitaire permet donc une préhension sélective d'un unique composant d'assemblage. Cela se traduit notamment par une préhension et un transfert efficace du composant d'assemblage. En effet, on s'affranchit d'une préhension d'une pluralité de composants d'assemblage dont le positionnement de certains peuvent empêcher, bloquer ou interrompre la préhension, voire le transfert. Cela permet également au dispositif de s'adapter aux composants d'assemblage de géométries et/ou de type différents.

Selon une autre caractéristique particulière du dispositif, au moins un des moyens de préhension comprend une tête de préhension montée mobile en translation, selon un axe de translation parallèle à l'axe central, au moins entre :
- une première position de préhension d'au moins un composant d'assemblage extrait, dans laquelle la tête de préhension est au voisinage du moyen d'extraction associé, et
- une deuxième position de transfert du au moins un composant d'assemblage préempté, laquelle la tête de préhension est à distance du moyen d'extraction associé.

Une telle tête de préhension mobile en translation permet notamment d'éviter que composant d'assemblage préempté heurte les parois des réservoirs, et ce indépendant de la géométrie celui-ci. Cela se traduit notamment par un transfert efficace de tous types de composants d'assemblage.

Selon une autre caractéristique particulière du dispositif, le déplacement de la tête de préhension entre la première position à la deuxième position est initié par un actionneur sélectif.

Un tel actionneur sélectif permet notamment d'assurer l'activation d'un unique moyen de préhension. Cela peut contribuer à minimiser les risques de transferts erronés de composants d'assemblage, pouvant éventuellement engendrer une dégradation des moyens d'assemblage dédiés et/ou un assemblage défectueux ou inadapté.

Selon une autre caractéristique particulière du dispositif, l'actionneur sélectif est un deuxième bras mobile en rotation autour de l'axe central, de sorte à sélectionner le moyen de préhension devant être déplacé, et mobile en translation selon l'axe central, de sorte à initier le déplacement du moyen de préhension sélectionné.

Selon une autre caractéristique particulière du dispositif, au moins un des moyens de préhension comprend des moyens de solidarisation temporaire au composant d'assemblage extrait par le moyen d'extraction associé.

Une telle solution permet notamment d'assurer la préhension du composant d'assemblage dans le moyen d'extraction et sa libération en regard des moyens d'acheminement à destination d'un poste de travail distant. Cela permet notamment de simplifier la structure du dispositif en s'affranchissant de la mise en œuvre d'un autre organe de libération dédié. Cela se traduit notamment par une réduction des coûts et de l'emploi de ressources première pour fabrication du dispositif.

Selon une autre caractéristique particulière du dispositif, la tête de préhension présente un moyen d'aspiration du composant d'assemblage extrait.

Une telle solution pneumatique présente notamment l'avantage de fonctionner avec des composants d'assemblage réalisés en des matériaux variés. Par exemple, il est possible d'assurer une préhension et un transfert de composants d'assemblage aussi bien ferromagnétiques que non ferromagnétiques.

Selon une autre caractéristique particulière du dispositif, le moyen d'aspiration est automatiquement actionné lorsque l'actionneur est positionné en regard de la tête de préhension.

Une telle activation automatique des moyens de préhension, obtenue par un alignement d'une pluralité de portions de canalisations fluidiques, permet notamment de simplifier le fonctionnement du dispositif.

Selon une autre caractéristique particulière du dispositif, les moyens d'acheminement comprennent une pluralité de tubes d'acheminement des composants d'assemblages, les tubes d'acheminement étant portés par une unité mobile en translation, selon un axe parallèle à l'axe central.

Un tel agencement permet notamment de s'adapter à la géométrie (longueur) des différents composants d'assemblage devant être acheminés vers le poste de travail. Le déplacement en translation de l'unité mobile permet en outre de garantir le bon engagement du composant d'assemblage dans le tube d'acheminement associé, ainsi que de minimiser les fuites d'air lors de l'aspiration par les unités d'aspiration situés au poste de travail. La mise en œuvre d'une pluralité de tubes d'acheminement permet notamment d'offrir un diamètre intérieur de tube adapté au diamètre de tête du composant. Cela permet notamment de garantir une bonne efficacité d'aspiration depuis le poste de travail. Ceci permet également d'avoir une arrivée indépendante en fonction du composant d'assemblage.

### 5. Liste des figures

D'autres caractéristiques et avantages de l'invention apparaîtront à la lecture de la description suivante d'un mode de réalisation particulier, donnée à titre de simple exemple illustratif et non limitatif, et des dessins annexés, parmi lesquels :
- [Fig.1] : la figure 1 illustre, selon une vue en perspective surélevée, un exemple de dispositif de stockage et de distribution de composants d'assemblage conforme l'invention ;
- [Fig.2] : la figure 2 illustre, selon une vue en coupe, davantage la structure des moyens de transfert de composants d'assemblage de la figure 1 ;
- [Fig.3] : la figure 3 est une vue partielle de la figure 2 focalisée sur les moyens de préhension appartenant aux moyens de transfert ;
- [Fig.4A] et [Fig.4B] : les figures 4A et 4B illustrent, selon différentes vues en coupe, les moyens d'acheminement de composants extraits de la figure 1; et
- [Fig.5A] et [Fig.5B] : les figures 5A et 5B illustrent, selon des vues en perspective et en coupe respectivement, la structure centrale de révolution de la figure 1.

### 6. Description détaillée de l'invention

### 6.1 Description d'un mode de réalisation illustratif

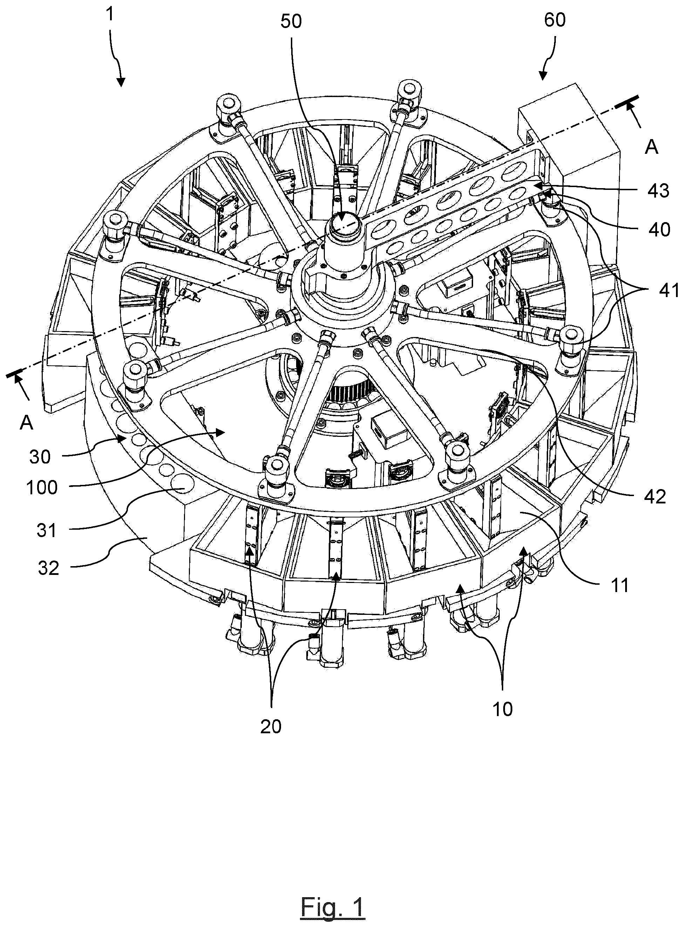

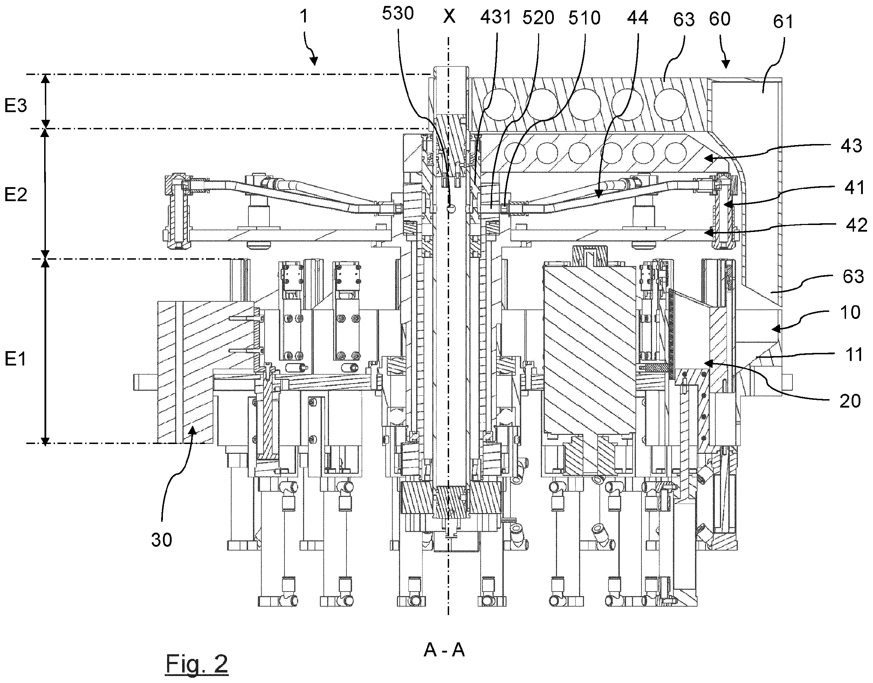

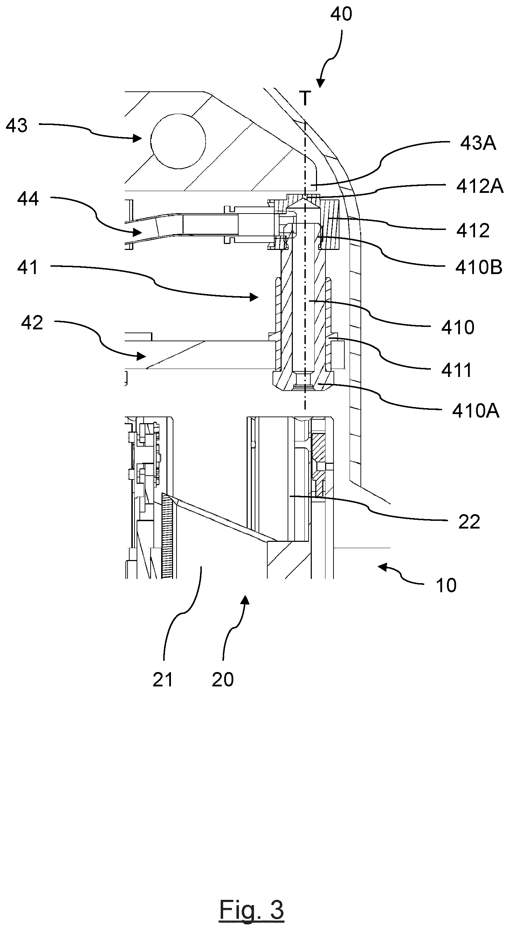

Les **figures 1** à **5B** illustrent, selon différentes vues, un exemple de dispositif de stockage et de distribution de composants d'assemblage conforme à un mode de réalisation de l'invention.

Le dispositif 1 de stockage et de distribution de composants d'assemblage comprend classiquement un châssis 100 fixe supportant :
- une pluralité de réservoirs 10 aptes à contenir des composants d'assemblage (non représentés), de préférence, de géométries et/ou de type différents (vis, rivets, etc.) ;
- pour chaque réservoir 10, un moyen d'extraction 20, en dehors du réservoir 10, de composants d'assemblage associés ;
- des moyens d'acheminement 30 de composants d'assemblage extraits des réservoirs 10, par les moyens d'extraction 20, à destination d'au moins un poste de travail distant (non représentés), tel un bras robotisé équipé d'au moins un organe d'assemblage des composants d'assemblage issus du dispositif 1 ; et
- des moyens de transfert 40, jusqu'aux moyens d'acheminement 30, de composants d'assemblage extraits des réservoirs 10 par les moyens d'extraction 20.

En d'autres termes, les moyens de transfert 40 assurent le déplacement des composants d'assemblage entre une première position, dite position d'extraction, dans laquelle les composants d'assemblage sont situés au niveau des moyens d'extraction 20 associés, et une deuxième position, dite position d'acheminement, dans laquelle les composants d'assemblage extraits sont situés au niveau des moyens d'acheminement 30.

Selon l'invention, les réservoirs 10 du dispositif 1 sont disposés de façon radiale autour d'un axe central X.

Par ailleurs, les moyens de transfert 40 comprennent des moyens de préhension 41 d'au moins un composant d'assemblage extrait par les moyens d'extraction 20.

Les moyens de préhension 41 sont portés respectivement par un bras 42 mobile en rotation autour de l'axe central X de sorte à transférer jusqu'au moyens d'acheminement 30 chaque composant d'assemblage extrait du réservoir 10 depuis lequel il est extrait.

Ainsi, conformément au principe général de l'invention, chaque composant d'assemblage extrait d'un réservoir 10 est transféré de la position d'extraction à la position d'acheminement selon un mouvement de rotation autour de l'axe central X.

Plus précisément, dans ce mode de réalisation, le dispositif 1 comprend :
- un premier étage E1, présentant une première altitude,
- un deuxième étage E2, présentant une deuxième altitude, la deuxième altitude étant plus élevée que la première altitude, et
   - un troisième étage E3, présentant une troisième altitude, la troisième altitude étant plus élevée que les première et deuxième altitudes.

Un tel agencement étagé permet notamment de réduire l'encombrement du dispositif 1 et d'assurer un transfert précis et efficace des composants d'assemblage.

Le châssis 100 du dispositif 1 supporte, au premier étage E1, les réservoirs 10 et les moyens d'acheminement 30. Ceux-ci sont disposés de façon radiale autour de l'axe central X de sorte à définir sensiblement un anneau segmenté.

Dans l'exemple illustré, les moyens d'acheminement 30 sont centralisés, c'est-à-dire qu'ils définissent un unique segment de l'anneau.

Les moyens d'acheminement 30 comprennent une pluralité de tubes d'acheminement 31 de diamètres différents de sorte à permettre le passage de composants d'assemblage de géométries et/ou de type différents.

Plus précisément, les tubes d'acheminement 31 présentent des diamètres adaptés aux différents composants d'assemblage et sont reliés à des unités d'aspiration situées au niveau du poste de travail (non représentés) permettant ainsi d'assurer le déplacement des composants depuis le dispositif de stockage vers le poste de travail. Ces moyens d'aspiration sont connus de l'homme de l'art. On peut citer par exemple un éjecteur, une centrale d'aspiration, etc...

Les tubes d'acheminement 31 sont portés par une unité mobile 32 en translation selon un axe parallèle à l'axe central X, entre une position basse et une position haute, de sorte à s'adapter à la géométrie (longueur) des composants d'assemblage devant être évacués.

La translation de l'unité mobile 32 entre la position basse et la position haute, et inversement, est initié par un vérin 34 dont le corps est solidarisé au châssis 100.

Chaque réservoir 10 est muni d'un fond 11 présentant une fente (non référencée) dans laquelle le moyen d'extraction 20 associé est mobile, selon un axe vertical parallèle à l'axe central X, entre une position basse (non illustrée), de prélèvement d'une pluralité de composants d'assemblage dans le fond 11 du réservoir 10 associé, et une position haute, d'extraction de la pluralité de composants d'assemblage hors du réservoir 10 associé.

Dans l'exemple illustré, les moyens d'extraction 20 présentent respectivement une première partie 21, comprenant un premier logement apte à recevoir une pluralité de composants d'assemblage, et une deuxième partie 22, comprenant un deuxième logement apte à recevoir un unique composant d'assemblage appartenant à la pluralité de composants d'assemblage.

Les deux parties 21, 22 sont mobiles en translation l'une par rapport à l'autre selon l'axe vertical. La deuxième partie 22 est par ailleurs configurée pour prendre une position de distribution unitaire dans laquelle le composant d'assemblage contenu dans le deuxième logement de la deuxième partie 21 est longitudinalement décalé, suivant l'axe vertical, des composants d'assemblage contenus dans le premier logement de la première partie 21.

De tel moyens d'extraction 20 en deux parties mobiles permettent d'orienter verticalement les composants d'assemblage extraits du réservoir, puis de les disposer de manière unitaire regard des moyens de préhension 41 associés.

Le châssis 100 porte en outre une structure centrale 50 de révolution, formée de trois tubes creux 51, 52, 53 coaxiaux, s'étendant selon l'axe central X et disposée de manière coaxiale à celui-ci.

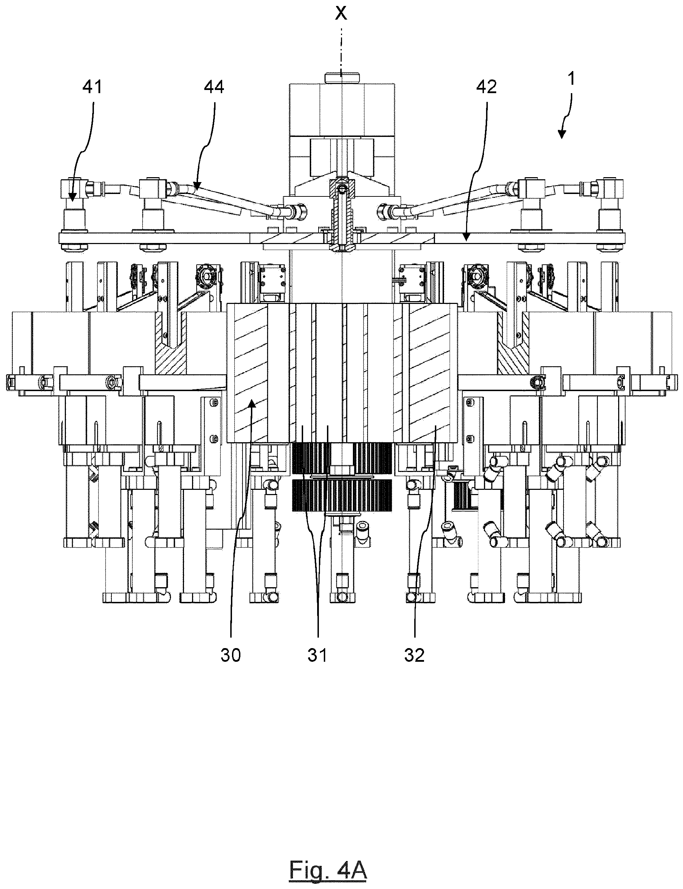

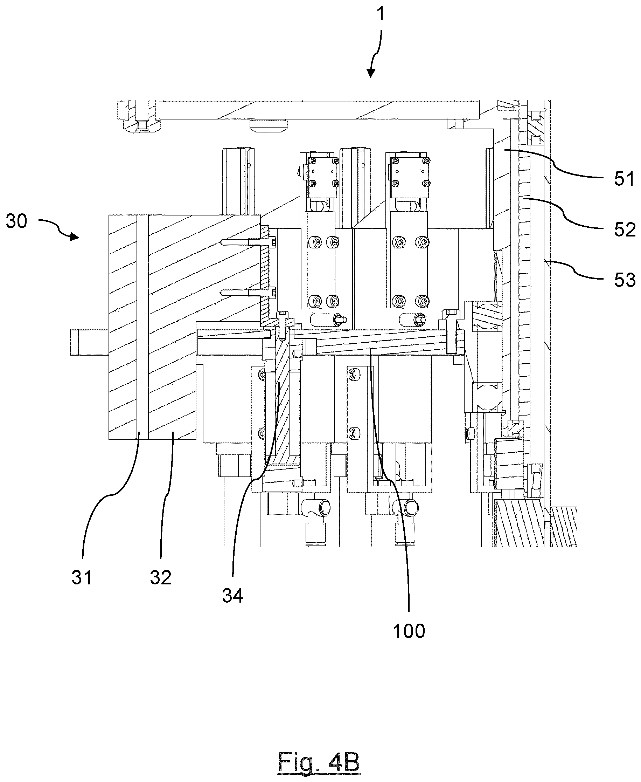

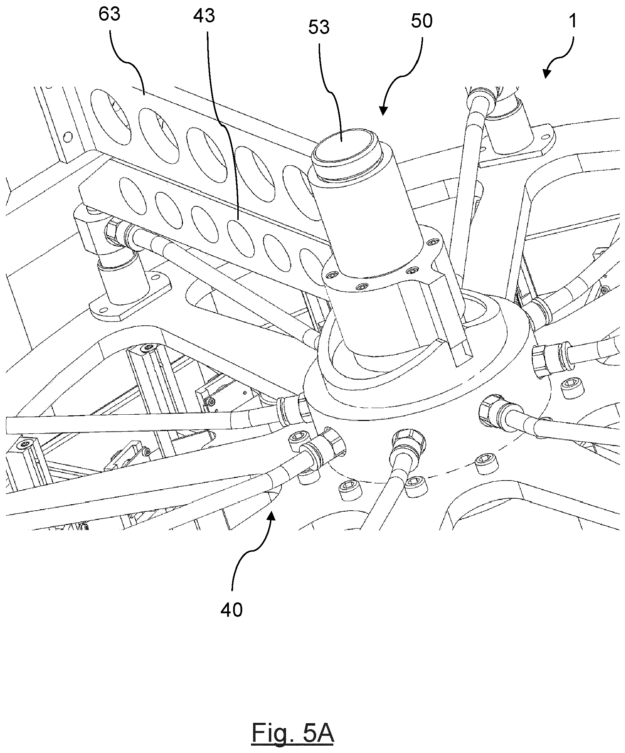

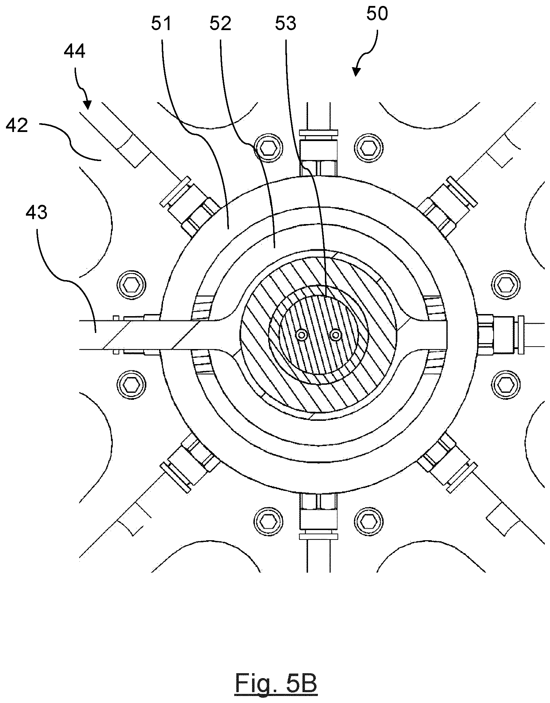

Plus précisément, la structure centrale 50 de révolution, davantage visible sur les figures 4B, 5A et 5B, comprend :
- un tube externe 51, configuré pour supporter, au deuxième étage E2, les moyens de transfert 40 des composants d'assemblage préemptés ;
- un tube central 53, configuré pour supporter, au troisième étage E3, des moyens d'alimentation 60 des réservoirs 10 en composants d'assemblage ; et
- un tube intermédiaire 52, configuré pour supporter, au deuxième étage E2, un actionneur 43 d'une translation des moyens de préhension 41, détaillés ultérieurement.

Les moyens de préhension 41 sont par ailleurs situés à une distance prédéterminée de l'axe central X de manière à être verticalement alignés, d'une part, avec les moyens d'extraction 20 pour permettre la préhension des composants d'assemblage extraits et, d'autre part, avec les moyens d'acheminement 30 pour permettre l'évacuation des composants d'assemblage préemptés.

Ainsi, les moyens de préhension 41 des composants d'assemblage extraits sont situés au-dessus des moyens d'extraction 20 et des moyens d'acheminement 30 et se déplacent de l'un à l'autre selon des mouvements de rotation.

Les moyens de préhension 41 sont par ailleurs mobiles en translation, selon un axe T orienté parallèlement à l'axe central X, entre une position basse, de préhension unitaire du composant d'assemblage extrait par le moyen d'extraction 20 associé, et une position haute, de transfert du composant d'assemblage préempté.

Sont également prévus, un actionneur 43 commandable, pour entraîner le déplacement des moyens de préhension 41 de la position haute à la position basse, et des moyens de rappel (non représentés) pour assurer, lorsque l'actionneur 43 n'est plus commandé, le retour des moyens de préhension 41 en position haute.

Un tel agencement permet notamment d'assurer, en position basse, une préhension aisée du composant d'assemblage extrait, et ce indépendamment de ses dimensions. Un tel agencement permet en outre d'assurer une préhension et un maintien efficace d'une extrémité, de préférence la tête, du composant d'assemblage extrait par le moyen d'extraction associé.

Dans l'exemple illustré, la préhension et un maintien de la tête de composant d'assemblage sont assurés, de manière temporaire, par des moyens de préhension 41 pneumatiques. Une telle solution pneumatique présente notamment l'avantage de fonctionner avec des composants d'assemblage réalisés en des matériaux variés.

Plus précisément, les bras 42, dont les extrémités sont solidarisées entre elles de sorte à former sensiblement une roue à rayons, sont montés mobiles en rotation sur le tube externe 51. De préférence, l'écartement angulaire entres les bras 42 est identique afin d'assurer une répartition homogène de la masse des bras 42 et des moyens de préhension 41 portés par ceux-ci.

Par ailleurs, chaque moyen de préhension 41 pneumatique comprend une tête de préhension 410 creuse montée de manière coulissante, selon l'axe de translation T, à l'intérieur d'un manchon de guidage 411 solidaire du bras 42 associé.

La tête de préhension 410 présente une première extrémité 410A, dite proximale, formant un moyen d'aspiration, apte à préempter et retenir une tête de composant d'assemblage extrait par le moyen d'extraction 20 associé, et une deuxième extrémité 410B, dite distale, solidarisée et couplée de manière pneumatique à une embase 412 de butée de translation.

Une telle embase 412 est configurée pour coopérer avec l'actionneur 43 pour permettre le coulissement de la tête de préhension 410 de la position haute à la position basse de préhension d'un composant d'assemblage extrait.

Pour ce faire, l'embase 412 présente, dans le prolongement de la tête de préhension 410, selon l'axe de translation T, une surface d'appui 412A, formant enclume, configurée pour coopérer avec une extrémité 43A l'actionneur 43.

Cet actionneur 43 est formé par un deuxième bras monté sur le tube intermédiaire 52 de la structure centrale 50 de manière mobile, d'une part, en rotation autour de l'axe central X de sorte à s'aligner avec la tête de préhension 410 désirée et, d'autre part, en translation selon cet axe central X, via un piston 431, de sorte à coopérer avec surface d'appui 412A de l'embase 412 de la tête de préhension 410 sélectionnée pour descendre celle-ci contre le composant d'assemblage extrait.

Le moyen de rappel (non représenté), assurant le retour de la tête de préhension 410 en position initiale, est formé par un ressort hélicoïdale disposé autour de la tête de préhension 410 et entre le manchon de guidage 411 et l'embase 412.

L'embase 412 est également configurée pour être raccordée à une alimentation d'énergie pneumatique, elle-même configurée pour créer un flux d'air d'aspiration (pour la préhension d'un composant d'assemblage) ou, si besoin, d'un flux d'air d'expiration (pour une éjection forcée d'un composant d'assemblage).

Dans l'exemple illustré, l'alimentation d'énergie pneumatique (non représentée) est raccordée à l'extrémité longitudinale inférieure du tube central 53 pour permettre le passage d'un flux d'air à l'intérieur de celui-ci.

Au deuxième étage E2 du dispositif 1, la structure centrale 50 présente :
- sur la paroi du tube central 53, des orifices 530 ménagés radialement ;
- dans le tube intermédiaire 52, un canal 520 ménagé radialement ;
- dans le tube externe 51, des raccords 510 de branchement de canalisations fluidiques 44 ménagés radialement.

Ainsi, lorsque l'actionneur 43 est positionné en regard d'une tête de préhension 410 spécifique, il y a un alignement radial de l'orifice 530 associé du tube central 53, du canal 520 du tube intermédiaire 52 et du raccord 510 associé du tube externe 51. Cela permet la création d'un passage d'alimentation fluidique de la tête de préhension 410.

En d'autres termes, outre l'entrainement en translation la tête de préhension 410 de sa position hause à sa position basse, l'actionneur 43 permet également de commander, via le canal 520 ménagé dans le tube intermédiaire 52, le passage du flux d'air dans celle-ci pour assurer la préhension du composant d'assemblage.

La tête de préhension 410 porte en outre un capteur de présence (non représenté) d'un composant d'assemblage positionné à sa première extrémité 410A pour vérifier la présence d'un tel composant dans le moyen d'aspiration.

Dans cet exemple, les moyens d'alimentation 60 comprennent une trémie 61 dont la portion de décharge 62 est verticalement alignée avec les réservoirs 10 et portée par un troisième bras 63 mobile en rotation selon l'axe central X.

Le dispositif comprend en outre au moins un processeur couplé à une mémoire, RAM par exemple, sur lequel sont enregistrés un programme informatique permettant d'assurer le fonctionnement décrit du dispositif 1, qui est partiellement décrit ci-après.

Un tel dispositif 1 de stockage et de distribution de composants d'assemblage comprend notamment les étapes principales suivantes :
- dans une étape préalable, il a été indiqué, par des moyens idoines, au dispositif 1 qu'un type particulier de composant d'assemblage présent dans le réservoir 10 doit être acheminé au poste de travail ;
- dans une première étape, dite d'extraction du composant d'assemblage, le moyen d'extraction 20 associé au réservoir 10 est commandé, par le biais de vérins, pour, dans un premier temps, descendre en position basse pour prélever une pluralité de composants d'assemblage dans le fond 11 du réservoir 10 et, dans un second temps, remonter successivement en position haute puis en position de distribution unitaire d'un composant d'assemblage provenant de la pluralité de composants d'assemblage. À la fin de cette première étape, au moins un des composants d'assemblage extraits du réservoir 10 est orienté verticalement et situé en regard de la tête de de préhension 41 associé.
- dans une deuxième étape, dite de préhension, l'actionneur 43 des moyens de transfert 40 est commandé pour pivoter autour du tube intermédiaire 52 pour se positionner au-dessus du moyen de préhension 41 associé. Lorsque l'actionneur 43 est aligné avec le moyen de préhension 41, il y a un alignement radial de l'orifice 530 associé du tube central 53, du canal 520 du tube intermédiaire 52 et du raccord 510 associé du tube externe 51. Cela permet la création d'un passage d'alimentation fluidique du moyen d'aspiration 410A. L'actionneur 43 est ensuite commandé pour coulisser le long du tube intermédiaire 52 pour exercer une pression sur le moyen de préhension 41 de sorte à descendre celui-ci de la position haute à la position basse, dans laquelle le moyen de préhension 41 rentre en contact avec le composant d'assemblage extrait et préempte celui-ci.
- dans une troisième étape, le moyen d'extraction 20 est commandé pour retourner en position haute, c'est-à-dire s'abaisser, afin notamment de libérer le composant d'assemblage préempté par le moyen de préhension 41.
- dans une quatrième étape, l'actionneur 43 est commandé pour remonter en coulissant le long du tube intermédiaire 52. Cette translation combinée aux moyens de rappel de la tête de préhension 410, permettent à celle-ci de revenir en position haute (position initiale).
- dans une cinquième étape, le bras 42 est commandé pour pivoter autour du tube externe 51 pour déplacer, selon un mouvement de rotation, le moyen de préhension 41 et le composant d'assemblage préempté par celui-ci vers et au-dessus du tube d'acheminement 31 associé appartenant aux moyens d'acheminement 30. Un tel déplacement simultané des bras 42 et l'actionneur 43 est nécessaire pour assurer une continuité d'aspiration et donc de maintien du composant d'assemblage par la tête de préhension 410,
- dans une sixième étape, l'actionneur 43 est est commandé pour coulisser le long du tube intermédiaire 52 pour exercer une pression sur le moyen de préhension 41 de sorte à descendre celui-ci de la position haute à la position basse, dans laquelle le composant d'assemblage préempté est inséré dans le tube d'acheminement 31 associé,
- dans une septième étape, optionnelle, la position verticale des moyens d'acheminement 30 est ajustée pour permettre l'insertion et le passage du composant d'assemblage préempté dans le tube d'acheminement 31 associé,
- dans une septième étape, le fonctionnement du moyens d'aspiration 410A est interrompu pour permettre au composant d'assemblage préempté d'être libéré dans le tube d'acheminement 31 associé. De préférence, l'unité d'aspiration couplée au tube d'acheminement 31 associé est activée, pour permettre une aspiration du composant d'assemblage jusqu'au poste de travail. Une telle aspiration est réalisée en contrôlant la pression, le temps et le débit en fonction du type et/ou de la géométrie du composant d'assemblage.

### 6.3 Autres modes de réalisation et variantes

Dans le mode de réalisation illustré, les moyens d'acheminement 30 sont centralisés parmi les réservoirs, c'est-à-dire qu'ils définissent un unique segment de l'anneau segmenté. Selon un autre mode de réalisation, non représenté, une alternance de moyens d'acheminement et d'un ou plusieurs réservoirs peut être envisagée. Un tel agencement alternatif présente un intérêt lorsque le dispositif 1 est destiné à alimenter plusieurs postes de travail notamment.

Dans le mode de réalisation illustré, les moyens d'acheminement 30 comprennent une unité mobile 32 en translation selon un axe parallèle à l'axe central X, entre une position basse et une position haute, de sorte à s'adapter à la géométrie (longueur) des composants d'assemblage devant être évacués. Selon un autre mode de réalisation, non représenté, les moyens d'acheminement peuvent être montés de manière fixe sur le châssis. Cela peut notamment contribuer à réduire les coûts du dispositif.

Dans le mode de réalisation illustré, les moyens d'extraction 20 comprennent deux parties mobiles l'une par rapport à l'autre de sorte à orienter verticalement les composants d'assemblage extraits du réservoir, puis de les disposer de manière unitaire en regard des moyens de préhension 41 associés. Toutefois, toute autre solution permettant au moins d'extraire un ou plusieurs composants d'assemblage selon une orientation verticale peut être alternativement envisagée.

Dans le mode de réalisation illustré, la préhension et un maintien de la tête de composant d'assemblage sont assurés, de manière temporaire, par des moyens de préhension pneumatiques. Toutefois, toute autre solution permettant d'assurer une préhension temporaire (c'est-à-dire commandée) du composant d'assemblage extrait peut être alternativement envisagée. Par exemple, pour les composants d'assemblage réalisé en des matériaux ferromagnétiques, il peut être envisagé de mettre en œuvre des électro-aimants. Une telle solution peut aider à simplifier la structure du dispositif, notamment celle de la structure centrale de révolution.

Dans le mode de réalisation illustré, la tête de préhension est mobile en translation sur le bras associé afin de rentrer en contact avec le composant d'assemblage extrait. Selon un autre mode de réalisation, non représenté, la tête de préhension est fixe. Dans ce mode de réalisation alternatif, les moyens d'extraction sont configurés pour que la position de distribution permette au composant d'assemblage extrait d'entrer en contact avec la tête de préhension fixe. Une telle alternative peut aider à simplifier la structure du dispositif.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention, telle que définie par les revendications et notamment toutes combinaisons des différents modes de fonctionnement décrits précédemment, pouvant être pris séparément ou en association.

Plus généralement, l'invention couvre toutes les mises en œuvre du principe selon lequel chaque composant d'assemblage extrait d'un réservoir est transféré de la position d'extraction, en dehors du réservoir par des moyens appropriés, à la position d'acheminement, vers un poste de travail, selon un mouvement de rotation autour de l'axe central.

Selon différents aspects, l'invention présente donc tout ou partie des avantages suivants, en fonction des modes de réalisation retenus :
- permettre d'améliorer la précision et/ou l'efficacité de la préhension d'un composant d'assemblage en vue de son transfert ;
- permettre d'améliorer la cadence de transfert des composants d'assemblage ;
- s'adapter aux composants d'assemblage de géométries et/ou de type différents;
- limiter l'encombrement du dispositif de stockage et de distribution de composants d'assemblage ;
- garantir une longévité importante ;
- nécessiter une maintenance limitée ;
- limiter les coûts de fabrication ;
- etc.

## Revendications

1. Dispositif (1) de stockage et de distribution de composants d'assemblage comprenant :
- une pluralité de réservoirs (10) aptes à contenir des composants d'assemblage,
- des moyens d'extraction (20), en dehors desdits réservoirs (10), de composants d'assemblage, lesdits moyens d'extraction (20) étant respectivement associés à chacun desdits réservoirs (10),
- des moyens d'acheminement (30), à destination d'au moins un poste de travail distant, de composants d'assemblage extraits desdits réservoirs (10) par lesdits moyens d'extraction (20),
- des moyens de transfert (40), jusqu'auxdits moyens d'acheminement (30), de composants d'assemblage extraits desdits réservoirs (10) par lesdits moyens d'extraction (20),
**caractérisé en ce que** lesdits réservoirs (10) sont disposés de façon radiale autour d'un axe central (X),
**et en ce que** lesdits moyens de transfert (40) comprennent des moyens de préhension (41), d'au moins un composant d'assemblage extrait par lesdits moyens d'extraction (20), lesdits moyens de préhension (41) étant portés respectivement par un bras (42) mobile en rotation autour dudit axe central (X) de sorte à transférer jusqu'auxdits moyens d'acheminement (30) chaque composant d'assemblage extrait d'un desdits réservoirs (10) depuis lequel il est extrait.

2. Dispositif (1) de stockage et de distribution selon la revendication 1, caractérisé en qu'au moins un desdits moyens de préhension (41) est un moyen de préhension unitaire d'un composant d'assemblage extrait par ledit moyen d'extraction (20) associé.

3. Dispositif (1) de stockage et de distribution selon l'une quelconque des revendications 1 et 2, caractérisé en qu'au moins un desdits moyens de préhension (41) comprend une tête de préhension (410) montée mobile en translation, selon un axe de translation parallèle audit axe central (X), au moins entre :
- une première position de préhension d'au moins un composant d'assemblage extrait, dans laquelle ladite tête de préhension (410) est au voisinage dudit moyen d'extraction (20) associé, et
- une deuxième position de transfert dudit au moins un composant d'assemblage préempté, dans laquelle ladite tête de préhension (410) est à distance dudit moyen d'extraction (20) associé.

4. Dispositif (1) de stockage et de distribution selon la revendication 3, caractérisé en que le déplacement de ladite tête de préhension (410) entre la première position à la deuxième position est initié par un actionneur (43) sélectif.

5. Dispositif (1) de stockage et de distribution selon la revendication 4, caractérisé en que ledit actionneur (43) sélectif est un deuxième bras mobile en rotation autour dudit axe central (X), de sorte à sélectionner ledit moyen de préhension (41) devant être déplacé, et mobile en translation selon ledit axe central (X), de sorte à initier le déplacement dudit moyen de préhension (41) sélectionné.

6. Dispositif (1) de stockage et de distribution selon l'une quelconque des revendications 1 et 5, **caractérisé en ce qu'**au moins un desdits moyens de préhension (41) comprend des moyens de solidarisation temporaire audit composant d'assemblage extrait par le moyen d'extraction (20) associé.

7. Dispositif (1) de stockage et de distribution selon la revendication 6, caractérisé en que ladite tête de préhension (410) présente un moyen d'aspiration (410A) dudit composant d'assemblage extrait.

8. Dispositif (1) de stockage et de distribution selon les revendications 4 et 7, caractérisé en que ledit moyen d'aspiration (410A) est automatiquement actionné lorsque ledit actionneur (43) est positionné en regard de ladite tête de préhension (410).

9. Dispositif (1) de stockage et de distribution selon l'une quelconque des revendications précédentes, **caractérisé en ce que** lesdits moyens d'acheminement (30) comprennent une pluralité de tubes d'acheminement (31) desdits composants d'assemblages, lesdits tubes d'acheminement (31) étant portés par une unité mobile (32) en translation, selon un axe parallèle audit axe central (X).

## Patentansprüche

1. Vorrichtung (1) zum Lagern und Verteilen von Montagekomponenten, umfassend:
- eine Vielzahl von Behältern (10), die imstande sind, Montagekomponenten zu enthalten,
- Mittel zum Extrahieren (20), außerhalb der Behälter (10), von Montagekomponenten, wobei die Mittel zum Extrahieren (20) jeweils jedem der Behälter (10) zugeordnet sind,
- Mittel zum Befördern (30) von Montagekomponenten, die durch die Mittel zum Extrahieren (20) aus den Behältern (10) extrahiert werden, zu mindestens einem entfernten Arbeitsplatz,
- Mittel zum Übertragen (40) bis zu den Mitteln zum Befördern (30) von Montagekomponenten, die von den Mitteln zum Extrahieren (20) aus den Behältern (10) extrahiert werden,
**dadurch gekennzeichnet, dass** die Behälter (10) radial um eine Mittelachse (X) angeordnet sind,
**und dadurch, dass** die Mittel zum Übertragen (40) Greifmittel (41) von mindestens eine von den Mitteln zum Extrahieren (20) extrahierte Montagekomponente umfassen, wobei die Greifmittel (41) jeweils von einem um die Mittelachse (X) drehbeweglichen Arm (42) getragen werden, um jede aus einem der Behälter (10), aus denen sie extrahiert wird, entnommene Montagekomponente zu den Mittel zum Befördern zu übertragen.

2. Vorrichtung (1) zum Lagern und Verteilen nach Anspruch 1, **dadurch gekennzeichnet, dass** mindestens eines der Greifmittel (41) ein einheitliches Greifmittel für eine von dem zugeordneten Mittel zum Extrahieren (20) extrahierte Montagekomponente ist.

3. Vorrichtung (1) zum Lagern und Verteilen nach einem der Ansprüche 1 und 2, **dadurch gekennzeichnet, dass** mindestens eines der Greifmittel (41) einen entlang einer zur Mittelachse parallelen Vorschubachse vorschubbbeweglich montierten Greifkopf (410) umfasst (X), mindestens zwischen:
- einer ersten Greifposition mindestens einer extrahierten Montagekomponente, in der sich der Greifkopf (410) in der Nähe des zugeordneten Mittels zum Extrahieren (20) befindet, und
- einer zweiten Übertragungsposition der mindestens einen greiften Montagekomponente, in welcher der Greifkopf (410) von dem zugeordneten Mittel zum Extrahieren (20) entfernt ist.

4. Vorrichtung (1) zum Lagern und Verteilen nach Anspruch 3, **dadurch gekennzeichnet, dass** die Verschiebung des Greifkopfs (410) zwischen der ersten Position und der zweiten Position durch ein selektives Stellglied (43) eingeleitet wird.

5. Vorrichtung (1) zum Lagern und Verteilen nach Anspruch 4, **dadurch gekennzeichnet, dass** das selektive Stellglied (43) ein zweiter um die Mittelachse (X) drehbeweglicher Arm ist, um das zu verschiebende und entlang der Mittelachse (X) vorschubbewegliche Greifmittel (41) auszuwählen, um die Verschiebung des ausgewählten Greifmittels (41) einzuleiten.

6. Vorrichtung (1) zum Lagern und Verteilen nach einem der Ansprüche 1 und 5, **dadurch gekennzeichnet, dass** mindestens eines der Greifmittel (41) Mittel zur vorübergehenden festen Verbindung an der durch das zugeordnete Mittel zum Extrahieren (20) extrahierten Montagekomponente umfasst.

7. Vorrichtung (1) zum Lagern und Verteilen nach Anspruch 6, **dadurch gekennzeichnet, dass** der Greifkopf (410) ein Saugmittel (410A) der extrahierten Montagekomponente aufweist.

8. Vorrichtung (1) zum Lagern und Verteilen nach den Ansprüchen 4 und 7, **dadurch gekennzeichnet, dass** das Saugmittel (410A) automatisch betätigt wird, wenn das Stellglied (43) gegenüber dem Greifkopf (410) positioniert ist.

9. Vorrichtung (1) zum Lagern und Verteilen nach einem der vorstehenden Ansprüche, **dadurch gekennzeichnet, dass** die Mittel zum Befördern (30) eine Vielzahl von Beförderungsrohren (31) der Montagekomponenten umfassen, wobei die Beförderungsrohre (31) von einer entlang einer zur Mittelachse (X) parallelen Achse vorschubbeweglichen Einheit (32) getragen werden.

## Claims

1. Storage and distribution device (1) for assembly components comprising:
- a plurality of containers (10) capable of containing assembly components,
- extraction means (20) for removing assembly components from said containers (10), said extraction means (20) being respectively associated with each of said containers (10),
- conveying means (30) for conveying, to at least one remote workstation, assembly components extracted from said containers (10) by said extraction means (20),
- transfer means (40) for transferring, to said conveying means (30), assembly components removed from said containers (10) by said extraction means (20),
**characterised in that** said containers (10) are arranged radially around a central axis (X),
**and in that** said transfer means (40) comprise gripping means (41) for at least one assembly component extracted by said extraction means (20), said gripping means (41) being respectively carried by an arm (42) movable in rotation about said central axis (X) so as to transfer to said conveying means each assembly component extracted from one of said containers (10) from which it is extracted.

2. Storage and distribution device (1) according to claim 1, **characterised in that** at least one of said gripping means (41) is a unit gripping means for an assembly component extracted by said associated extraction means (20).

3. Storage and distribution device (1) according to either of claims 1 and 2, **characterised in that** at least one of said gripping means (41) comprises a gripping head (410) mounted so as to be movable in translation, along a translation axis parallel to said central axis (X), at least between:
- a first position of gripping at least one extracted assembly component, wherein said gripping head (410) is in the vicinity of said associated extraction means (20), and
- a second position of transferring said at least one gripped assembly component, wherein said gripping head (410) being remote from said associated extraction means (20).

4. Storage and distribution device (1) according to claim 3, **characterised in that** the movement of said gripping head (410) from the first position to the second position is initiated by a selective actuator (43).

5. Storage and distribution device (1) according to claim 4, **characterised in that** said selective actuator (43) is a second arm movable in rotation about said central axis (X) so as to select said gripping means (41) to be moved, and movable in translation along said central axis (X) so as to initiate the movement of said selected gripping means (41).

6. Storage and distribution device (1) according to any one of claims 1 and 5, **characterised in that** at least one of said gripping means (41) comprises means for being temporarily secured to said assembly component extracted by the associated extraction means (20).

7. Storage and distribution device (1) according to claim 6, **characterised in that** said gripping head (410) has a suction means (410A) of said extracted assembly component.

8. Storage and distribution device (1) according to claims 4 and 7, **characterised in that** said suction means (410A) is automatically actuated when said actuator (43) is positioned opposite said gripping head (410).

9. Storage and distribution device (1) according to any one of the preceding claims, **characterised in that** said conveying means (30) comprise a plurality of conveying tubes (31) of said assembly components, said conveying tubes (31) being carried by a unit (32) that is movable in translation along an axis parallel to said central axis (X).
